# EUROPÄISCHE PATENTANMELDUNG

(11) **EP 3 225 724 A1**
(43) Veröffentlichungstag der Anmeldung: **04.10.2017**
(21) Anmeldenummer: 17160737.7
(22) Anmeldetag: 14.03.2017
(51) Int. Cl.: D01H 7/92

(54) **RIEMEN ZUR VERWENDUNG IN EINER FALSCHDRALLEINRICHTUNG EINER SPINNMASCHINE**

(30) Priorität: 29.03.2016 DE 102016105718
(71) Anmelder: Maschinenfabrik Rieter AG, 8406 Winterthur (CH)
(72) Erfinder: Blankenhorn, Peter, 89547 Gerstetten (DE); Schoch, Nikolaus, 73116 Wäschenbeuren (DE)
(74) Vertreter: Bergmeier, Werner

(57) **Zusammenfassung**

Die Erfindung betrifft einen Riemen zur Verwendung in einer Falschdralleinrichtung (9) einer Spinnmaschine, insbesondere Ringspinnmaschine, wobei der Riemen (10) zumindest teilweise aus einem Kunststoffmaterial (11) ausgebildet ist. Erfindungsgemäß weist der Riemen (10) Verstärkungsfasern (12) auf, die den Riemen (10) verstärken, so dass der Riemen (10) pro Newton Zugkraft eine Dehnung von maximal 0,05%, insbesondere pro Newton Zugkraft eine Dehnung von maximal 0,005%, aufweist. Ferner betrifft die Erfindung eine Spinnmaschine, insbesondere Ringspinnmaschine, mit einer Vielzahl nebeneinander angeordneter Spinneinheiten (1), wobei jede Spinneinheit (1) ein Streckwerk zum Verziehen eines Faserbandes und eine Spinneinrichtung zum Verdrehen des verzogenen Faserbandes zu einem Faden (3) sowie eine zwischen dem Streckwerk und der Spinneinrichtung angeordnete Falschdralleinrichtung (9) aufweist, wobei die Falschdralleinrichtung (9) zumindest zwei im Wesentlichen quer zum Faden (3) angeordnete, diesen kontaktierende und entgegengerichtet angetriebene Riementrums (4, 5) mindestens eines Riemens (10) aufweist, die Riementrums (4, 5) insbesondere z-förmig von dem Faden (3) umschlungen sind und als Reibfläche für den Faden (3) dienen und die Riementrums (4, 5) von zumindest einer Stützrolle (20) geführt sind.

## Beschreibung

Die vorliegende Erfindung betrifft einen Riemen zur Verwendung in einer Falschdralleinrichtung einer Spinnmaschine, insbesondere Ringspinnmaschine, wobei der Riemen zumindest teilweise aus einem Kunststoffmaterial ausgebildet ist. Ferner umfasst die Erfindung eine Spinnmaschine mit einer Vielzahl nebeneinander angeordneter Spinneinheiten, wobei jede Spinneinheit ein Streckwerk zum Verziehen eines Faserbandes und eine Spinneinrichtung zum Verdrehen des verzogenen Faserbandes zu einem Faden sowie eine zwischen dem Streckwerk und der Spinneinrichtung angeordnete Falschdralleinrichtung aufweist, wobei die Falschdralleinrichtung zumindest zwei im Wesentlichen quer zum Faden angeordnete, diesen kontaktierende und entgegengerichtet angetriebene Riementrums mindestens eines Riemens aufweist, die Riementrums insbesondere z-förmig von dem Faden umschlungen sind und als Reibfläche für den Faden dienen und die Riementrums von zumindest einer Stützrolle geführt sind.

Gattungsgemäße Riemen zur Verwendung in einer Falschdralleinrichtung einer Spinnmaschine dienen dazu, einen gesponnenen Faden mit einem Drall zu versehen. Die Falschdralleinrichtung weist dazu zumindest zwei im Wesentlichen quer zum Faden angeordnete, diesen kontaktierend und entgegengerichtet angeordnete Riementrums mindestens eines Riemens auf. Der Faden umschlingt mindestens zwei gegenläufige Riementrums insbesondere z-förmig. Die Riementrums dienen als Reibfläche für den Faden. Die gegenläufigen Riementrums können entweder von einem einzigen Riemen oder von zwei oder mehr separaten Riemen stammen. Wesentlich ist, dass diese in entgegengesetzter Richtung angetrieben sind und damit einen Drall in den Faden einbringen können. Die Geschwindigkeitsvektoren der Riemen, welche Reibflächen für den Faden darstellen, sind im Wesentlichen einander entgegen gerichtet und verlaufen in etwa quer zur Längsachse bzw. in Laufrichtung des Fadens. Bei richtig eingelegtem Faden werden die Riementrums von dem Faden so umschlungen, dass die beiden einander entgegen gerichteten Bewegungskomponenten der Riementrums den Faden verdrehen. Dadurch, dass die beiden Reibflächen durch den z-förmig umschlingenden Faden auf beiden Seiten des Fadens angreifen, wird die Verdrehung des Fadens bzw. seiner außenliegenden Fasern bewirkt.

Der Riemen ist dabei zumeist aus einem Kunststoff ausgebildet. Nachteilig dabei ist, dass der Riemen aus Kunststoff eine gewisse Dehnung aufweist. Wenn der Riemen über eine lange Strecke entlang der Spinnmaschine geführt ist, führt die Dehnung dazu, dass der Riemen durchhängt bzw. von dem Faden weggedrückt wird. Durch die beiden Effekte wird der Faden nicht mehr oder zumindest nicht mehr ausreichend verdreht, so dass eine Qualität des Fadens nicht mehr für eine Weiterverarbeitung ausreichen kann. Außerdem entstehen Probleme beim Anfahren der Maschine, da durch die Dehnung des Riemens starke Geschwindigkeitsunterschiede in den beiden gegenläufigen Riementrums entstehen können, welche zu Fadenbrüchen führen können.

Aufgabe der vorliegenden Erfindung ist es somit, einen Riemen zu schaffen, der diesen Nachteil beseitigt.

Die Aufgabe wird gelöst durch einen Riemen zur Verwendung in einer Falschdralleinrichtung sowie einer Spinnmaschine, die einen derartigen Riemen in der Falschdralleinrichtung verwendet, welche die Merkmale der unabhängigen Patentansprüche aufweisen.

Vorgeschlagen wird ein Riemen zur Verwendung in einer Falschdralleinrichtung einer Spinnmaschine, wobei der Riemen zumindest teilweise aus einem Kunststoff ausgebildet ist. Die Spinnmaschine kann dabei als eine Ringspinnmaschine ausgebildet sein. Der Kunststoff kann beispielsweise Polyurethan umfassen.

Der erfindungsgemäße Riemen weist Verstärkungsfasern auf, die den Riemen verstärken, so dass der Riemen pro Newton Zugkraft eine Dehnung von 0,05% aufweist. Der Riemen kann auch derart verstärkt sein, dass der Riemen pro Newton Zugkraft eine Dehnung von 0,005% aufweist. Wenn beispielsweise eine Zugkraft von 400 N auf den Riemen einwirkt, ergibt eine Dehnung von 0,005% pro Newton Zugkraft eine gesamte Dehnung von 2%. Dadurch ist der Riemen ausreichend gespannt, ohne dass der Riemen über längere Strecken entlang der Spinnmaschine wesentlich durchhängt oder unzulässige Geschwindigkeitsunterschiede beim Hochfahren der Falschdralleinrichtung entstehen. Außerdem kann dabei eine Spannkraft hoch genug eingestellt werden, so dass der zu verdrehende Faden den oder die Riemen in der Falschdralleinrichtung beim Betrieb der Spinnmaschine nicht auf die Seite drückt und der Faden nicht mehr ausreichend Kontakt zum Riemen aufweist.

Eine vorteilhafte Weiterbildung der Erfindung ist es, wenn die Verstärkungsfasern eine Seele des Riemens bilden. Dadurch kann der Riemen besonders einfach hergestellt werden, da beispielsweise nur die Seele mit dem Kunststoff, beispielsweise den Polyurethan, ummantelt werden muss.

Ferner ist es von Vorteil, wenn die Verstärkungsfasern Aramidfasern, Karbonfasern, Metallfasern, Keramikfasern, Glasfasern und/oder Polyolefinfasern umfassen. Die Polyolefinfasern können beispielsweise als Hochleistungsfasern wie Spectra- oder Dyneemafasern ausgebildet sein. Derartige Verstärkungsfasern weisen ein derartiges E-Modul auf, so dass die Dehnung des Riemens ausreichend gering ist.

Vorgeschlagen wird ferner ein Riemen zur Verwendung in einer Falschdralleinrichtung einer Spinnmaschine, insbesondere Ringspinnmaschine, wobei der Riemen zumindest teilweise aus einem Kunststoffmaterial ausgebildet ist. Dabei kann der Riemen auch nach zumindest einem Merkmal der vorangegangenen Beschreibung ausgebildet sein. Von Vorteil ist es dabei, wenn der Riemen einen Reibungskoeffizienten zwischen 0,1 und 0,6 aufweist. Der Reibungskoeffizient kann auch zwischen 0,3 und 0,4 liegen. Alternativ kann der Reibungskoeffizient auch zwischen 0,2 und 0,6 liegen. Nochmals alternativ könnte der Reibungskoeffizient auch zwischen 0,25 und 0,6, insbesondere zwischen 0,4 und 0,47, liegen. Der Riemen kann dabei die angegebenen Reibungskoeffizienten bei einer Temperatur zwischen 25 °C und 50 °C aufweisen. Außerdem kann der Reibungskoeffizient mittels einer Härte des Riemenmaterials, insbesondere des Kunststoffmaterials, erreicht werden. Desto härter der Riemen ist, desto geringer ist der Reibungskoeffizient. Andererseits ist der Reibungskoeffizient höher, wenn der Riemen weicher ausgebildet ist. Dadurch wird einerseits der Faden gemäß den Anforderungen verdreht. Andererseits wird die Gefahr eines Mitziehens des Fadens durch den Riemen vergrößert, was zu Fadenabrissen führen kann. Die Wahl des richtigen Reibungskoeffizienten hängt insbesondere von dem zu verdrehenden Fasermaterial ab.

Eine weitere vorteilhafte Weiterbildung der Erfindung ist es, wenn der Riemen ein Antistatikum umfasst, so dass eine statische Aufladung des Riemens verringert wird. Durch die Reibung zwischen dem Riemen und dem Faden können sich beide statisch aufladen. Umherfliegende einzelne Fasern, Flusen, Verschmutzungen aber auch Fadenenden, die bei einem Fadenriss auftreten können, werden von dem statisch aufgeladenen Riemen sowie dem statisch aufgeladenen Faden angezogen. Die Fasern, Flusen oder Verschmutzungen können daraufhin die Funktionsfähigkeit der Falschdralleinrichtung und/oder der ganzen Spinnmaschine negativ beeinflussen. Wenn dagegen beispielsweise bei einem Fadenriss ein Fadenende von einem Faden einer anderen Spinnstelle (die Spinnmaschine kann mehrere nebeneinanderliegende Spinnstellen aufweisen) angezogen wird, können sich beide Fäden verknoten, woraufhin beide Spinnstellen ausfallen und erst nach einer Wartung wieder in Betrieb genommen werden können. In einem weiteren negativen Szenario kann sich die statische Aufladung mittels einer Funkenentladung entladen und beispielsweise an elektronischen Bauteilen der Spinnmaschine Schäden hervorrufen.

Das Antistatikum kann beispielsweise nicht leitfähige Antistatika umfassen. Nicht leitfähige Antistatika sind beispielsweise hydrophile Substanzen. Das Antistatikum kann aber auch leitfähige Antistatika umfassen, wie beispielsweise Ruß.

Wenn der Riemen aus einem Kunststoffmaterial aufgebaut ist, das elektrisch leitfähig ist, kann auch auf ein Antistatikum verzichtet werden. Ein derartiges Kunststoffmaterial kann beispielsweise leitfähige Polymere umfassen, wie beispielsweise Polypyrrol, Polythiophen und/oder Polyanilin.

Das Antistatikum kann beispielsweise auch eine quartäre Ammoniumverbindung umfassen, die dem Kunststoffmaterial des Riemens und/oder den Verstärkungsfasern beigemischt ist, um die statische Aufladung des Riemens zu verringern.

Des Weiteren wird ein Riemen zur Verwendung in einer Falschdralleinrichtung einer Spinnmaschine, insbesondere Ringspinnmaschine, vorgeschlagen, wobei der Riemen zumindest teilweise aus einem Kunststoffmaterial ausgebildet ist. Dabei kann der Riemen auch nach zumindest einem Merkmal der vorangegangenen Beschreibung ausgebildet sein. Von Vorteil ist es dabei, wenn der Riemen einen Zusatzstoff umfasst, welcher einen elektrischen Widerstand verringert, so dass der Riemen einen elektrischen Widerstand von maximal 10^12 Ohm, insbesondere 10^6 Ohm, besonders bevorzugt 10^3 Ohm, aufweist. Der Zusatzstoff kann dabei selbst elektrisch leitfähig sein. Dadurch kann die statische Aufladung entlang des Riemens ausgeglichen werden, so dass der Riemen ein gleiches elektrisches Potential aufweist. Außerdem kann durch einen derartigen spezifischen Widerstand die statische Aufladung über den Riemen selbst zu einer Erdung abgeleitet werden. Der Zusatzstoff kann dabei ebenfalls dem Kunststoff und/oder den Verstärkungsfasern beigemischt sein.

Außerdem ist es von Vorteil, wenn der Zusatzstoff Metallpulver, Ruß, Graphit, Metallfasern und/oder Kohlefasern umfasst. Derartige Fasern können beispielsweise als Mikro- und/oder Nanofasern ausgebildet sein. Diese können dem Kunststoff des Riemens beigemischt sein.

Eine besonders vorteilhafte Weiterbildung der Erfindung ist es, wenn die Verstärkungsfasern selbst eine Leitfähigkeit im Bereich des oben genannten elektrischen Widerstands aufweisen.

Des Weiteren wird eine Spinnmaschine vorgeschlagen, die eine Vielzahl nebeneinander angeordneter Spinneinheiten aufweist. Eine geeignete Spinnmaschine ist beispielsweise eine Ringspinnmaschine. Jede Spinneinheit beinhaltet ein Streckwerk zum Verziehen eines Faserbandes und eine Spinneinrichtung zum Verdrehen des verzogenen Faserbandes zu einem Faden. Zwischen dem Streckwerk und der Spinneinrichtung ist eine Falschdralleinrichtung angeordnet. Insbesondere ist die Falschdralleinrichtung zwischen der Klemmlinie am Streckwerksausgang und der Spinneinrichtung angeordnet.

Die Falschdralleinrichtung weist zumindest zwei im Wesentlichen quer zum Faden angeordnete, diesen kontaktierende und entgegengerichtet angetriebene Riementrums mindestens eines Riemens auf. Der Faden umschlingt mindestens zwei gegenläufige Riementrums insbesondere z-förmig. Die Riementrums dienen als Reibfläche für den Faden. Die gegenläufigen Riementrums können entweder von einem einzigen Riemen oder von zwei oder mehr separaten Riemen stammen. Wesentlich ist, dass sie in entgegengesetzter Richtung angetrieben sind und damit einen Drall in den Faden einbringen können. Die Geschwindigkeitsvektoren der Riemen, welche Reibflächen für den Faden darstellen, sind im Wesentlichen einander entgegen gerichtet und verlaufen in etwa quer zur Längsachse bzw. in Laufrichtung des Fadens. Der oder die Riemen sind vorzugsweise aus Kunststoffmaterial hergestellt. Sie können unterschiedliche Querschnitte aufweisen. Bei richtig eingelegtem Faden werden die Riementrums von dem Faden so umschlungen, dass die beiden einander entgegen gerichteten Bewegungskomponenten der Riementrums den Faden verdrehen. Dadurch, dass die beiden Reibflächen durch den z-förmigen umschlingenden Faden auf beiden Seiten des Fadens angreifen, wird die Verdrehung des Fadens bzw. seiner außenliegenden Fasern bewirkt. Die Riementrums sind von zumindest einer Stützrolle geführt.

Erfindungsgemäß ist der Riemen mit zumindest einem Merkmal der vorangegangenen Beschreibung ausgebildet.

Eine vorteilhafte Weiterbildung der Spinnmaschine ist es, wenn diese eine Ableitungsvorrichtung umfasst, die mit dem Riemen einen elektrischen Kontakt aufweist, so dass mittels der Ableitungsvorrichtung eine statische Aufladung des Riemens ableitbar ist. Die Ableitungsvorrichtung kann beispielsweise als ein Gleitschuh ausgebildet sein, der über den Riemen schleift und dadurch den elektrischen Kontakt ausbildet. Über den Gleitschuh kann der Riemen geerdet werden, so dass die statische Aufladung abgeleitet wird. Die Ableitungsvorrichtung ist dabei mit einer Erdung verbunden, um die statische Aufladung abzuleiten.

Die Ableitungsvorrichtung kann beispielsweise auch einen Kohlekontakt umfassen. Dieser bildet einen sicheren elektrischen Kontakt zwischen dem Riemen und der Ableitungsvorrichtung. Dabei weist der Kohlekontakt eine relativ geringe Härte auf, so dass der Riemen durch den Kohlekontakt selbst nicht beschädigt wird. Außerdem weist der Kohlekontakt bei dem Anliegen an dem vorbeibewegenden Riemen einen gewissen Abrieb auf.

Von Vorteil ist es auch, wenn die Stützrolle elektrisch leitend ausgebildet ist, so dass die statische Aufladung des Riemens über die Stützrolle abgeleitet werden kann. Die Stützrolle kann dazu beispielsweise ein leitfähiges Metall umfassen, so dass durch das Abstützen des Riemens der elektrische Kontakt ausgebildet ist und die Stützrolle selbst als Ableitungsvorrichtung dient. Die Stützrolle ist weiterhin mit der Erdung verbunden, um die statische Aufladung abzuleiten.

Weitere Vorteile der Erfindung sind in den nachfolgenden Ausführungsbeispielen beschrieben. Es zeigen:
- **Figur 1**: eine Seitenansicht einer Falschdralleinrichtung,
- **Figur 2**: eine Schnittansicht eines Riemens mit Verstärkungsfasern in einer Seele und
- **Figur 3**: eine schematische Seitenansicht einer Spinnmaschine.

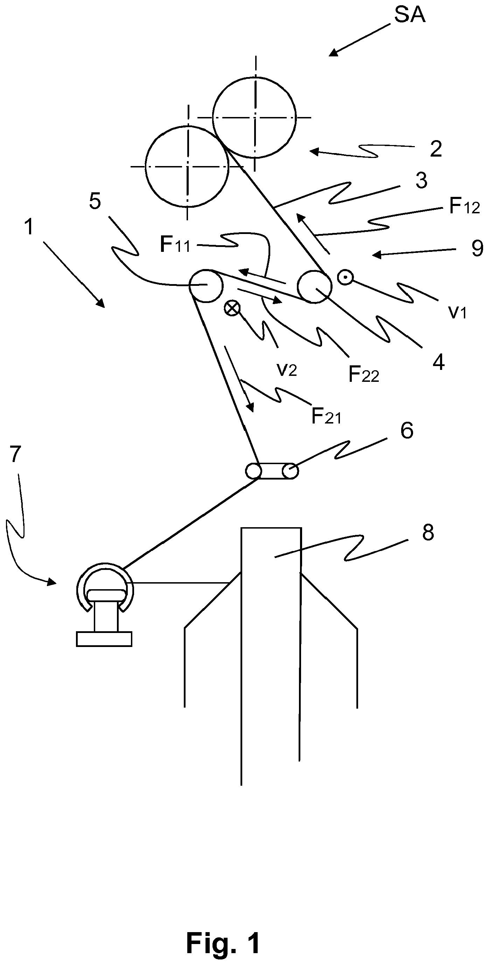

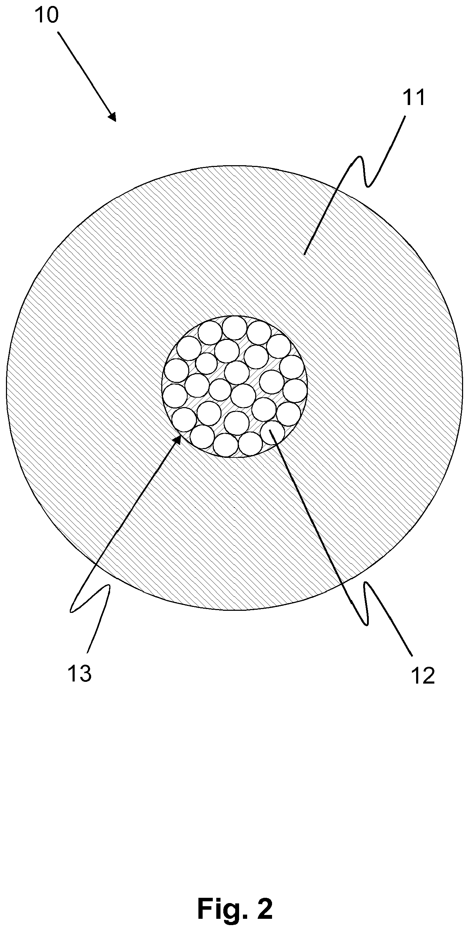

Ein erfindungsgemäßer Riemen 10 (vgl. Figur 2) findet Verwendung in einer Falschdralleinrichtung 9 einer Spinnmaschine, wobei die Verwendung einleitend anhand der Figur 1 beschrieben wird.

Darin ist eine Spinneinheit 1 einer Spinnmaschine 10 schematisch teilweise dargestellt. Ein Ausgangswalzenpaar 2 eines nicht dargestellten Streckwerks liefert einen Faden 3 und bildet einen Streckwerksausgang SA. Der Faden 3 wird um einen ersten Riemen 4 und sodann um einen zweiten Riemen 5 umgelenkt. Anschließend durchläuft der Faden 3 einen Fadenführer 6 sowie einen Ringläufer 7 und wird schließlich auf eine Spule 8 aufgewickelt. Der erste Riemen 4 und der zweite Riemen 5 bilden eine Falschdralleinrichtung 9. Bei den beiden Riemen 4 und 5 kann es sich um zwei separate Riemen 4 und 5 handeln oder um das ziehende und das schiebende Trum eines einzigen Riemens (beispielsweise des Riemens 10 der Figuren 2).

Der erste Riemen 4 und der zweite Riemen 5 bzw. die beiden Trums haben eine gegenläufige Bewegungsrichtung. Dadurch, dass der Faden 3 auf den zwei in entgegengesetzter Richtung sich bewegenden Riemen 4 und 5 aufliegt, wird er von dem einen Trum in die eine und von dem anderen Trum in die andere Richtung gezogen. Der Faden 3 wird soweit zu der Laufrichtung ausgelenkt, bis die beiden Reibkräfte in Balance sind. Die Fadenspannungen F₁₁ und F ₁₂ sowie F ₂₁ und F ₂₂ sind verschieden. Damit ist der Auflagedruck des Fadens 3 auf dem einen Riementrum unterschiedlich zum anderen Riementrum. Der Faden 3 wird so mehr von dem Riementrum mitgenommen auf dem er stärker aufliegt, vorausgesetzt es handelt sich um gleichartige Riemen 4 und 5. Beim Ringspinnen ist der Auflagedruck auf dem zum Fadenballon zwischen Fadenführer 6 und Ringläufer 7 näherliegenden Trum am Höchsten. Der Riemen 5 bzw. dieses Trum bewegt sich so, dass die echte Drehung durch den von dem Riemen 4 erzeugten Falschdrall zwischen dem Streckwerk (2) und dem Riementrum (4) verstärkt wird (bzw. zwischen dem Riementrum (5) und dem Kops (8) verringert wird). Zwischen Riemen 4 und Streckwerksausgangswalzenpaar 2 werden in der Regel mehr Drehungen eingeführt, wie dann später im fertigen Faden 3 auf dem Kops bzw. der Spule 8 vorhanden sind.

Die Riemen 4 oder 5 sind dabei zumeist aus einem Kunststoffmaterial ausgebildet. Die Riemen 4, 5 sind ferner über eine lange Strecke entlang der Spinnmaschine geführt und müssen eine gewisse Spannung aufweisen, so dass der Riemen 4, 5 nicht durchhängt bzw. von dem Faden 3 weggedrückt wird. Da das Kunststoffmaterial jedoch eine relativ hohe Dehnung aufweist, ist es trotzdem so, dass der Riemen 4, 5 durchhängt bzw. von dem Faden 3 weggedrückt wird. Durch die beiden Effekte wird der Faden 3 nicht mehr oder zumindest nicht mehr ausreichend verdreht, so dass eine Qualität des Fadens 3 nicht mehr für eine Weiterverarbeitung ausreicht. Außerdem kann der Faden leicht reißen, wenn durch die Dehnung die Geschwindigkeit des Zugtrums zu sehr unterschiedlich zum Leertrum des Riemens 10 ist.

Um diesem Nachteil zu begegnen, wird ein Riemen 10 zur Verwendung in einer Falschdralleinrichtung 9, wie beispielsweise in Figur 1 gezeigt ist, einer Spinnmaschine vorgeschlagen. Ein derartiger Riemen 10 ist beispielsweise in dem folgenden Ausführungsbeispiel gemäß der Figuren 2 gezeigt.

Figur 2 zeigt einen Riemen 10, der zumindest teilweise aus einem Kunststoffmaterial 11 ausgebildet ist und welches einen Grundkörper des Riemens 10 bildet. In einem Kernbereich des Riemens 10 sind eine Vielzahl Verstärkungsfasern 12 angeordnet, die eine Seele 13 des Riemens 10 bilden. Die Verstärkungsfasern 12 verstärken den Riemen 10 dabei derart, dass der Riemen 10 pro Newton Zugkraft eine Dehnung von 0,05% aufweist. Der Riemen 10 kann auch derart verstärkt sein, dass der Riemen pro Newton Zugkraft um 0,005% gedehnt wird. Mit einer derartigen Dehnung kann der Riemen 10 ausreichend gespannt werden, wobei der Riemen 10 sich nur geringfügig dehnt. Beispielsweise kann der Riemen mit einer Zugkraft von 400 N gespannt sein. Dann ergibt eine Dehnung von 0,005% pro Newton Zugkraft eine gesamte Dehnung von 2%.

Die Verstärkungsfasern 12 können beispielsweise Aramidfasern, Karbonfasern, Keramikfasern, Metallfasern, Glasfasern und/oder Polyolefinfasern umfassen. Die Polyolefinfasern können beispielsweise als Hochleistungsfasern wie z.B. Spectra- oder Dyneemafasern ausgebildet sein.

Der Riemen 10 weist in diesem Ausführungsbeispiel einen runden Querschnitt auf, kann jedoch beispielsweise auch einen elliptischen oder ovalen Querschnitt aufweisen.

Durch die Reibung zwischen dem Faden 3 und dem bzw. den Riementrums 4 und 5 in der Falschdralleinrichtung 9 wird eine statische Aufladung des Riemens 10 ausgebildet. Diese statische Aufladung kann in der Spinnmaschine herumfliegende Fasern, Flusen oder Fadenenden von anderen Spinneinheiten (die Spinnmaschine kann mehrere Spinneinheiten aufweisen) anziehen und dadurch das Verdrehen des Fadens 3 negativ beeinflussen.

Durch die elektrische Leitfähigkeit des Riemens 10 können statische Aufladungen, die während des Betriebs der Falschdralleinrichtung 9 entstehen, über den Riemen 10 abgeführt werden.

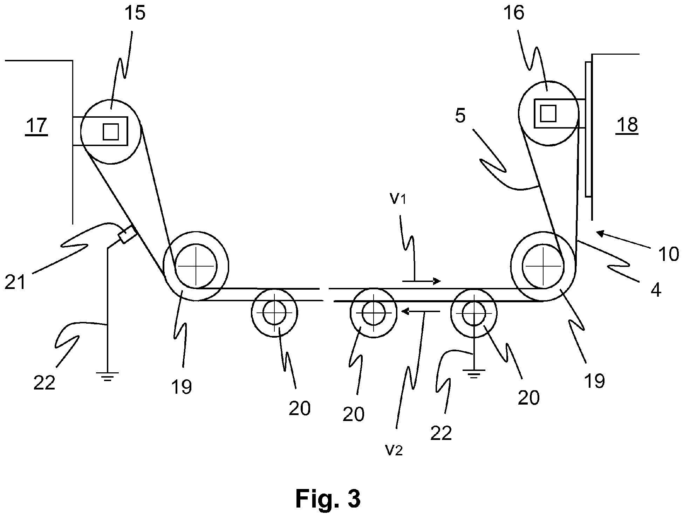

Figur 3 zeigt schematisch die Anordnung des Riemens 10 in Seitenansicht an einer Spinnmaschine. Der Riemen 10 ist zwischen einer Riemenantriebsscheibe 15 und einer Riemenspannscheibe 16 aufgespannt. Die Riemenantriebsscheibe 15 ist an einem Maschinen- bzw. Sektionsanfang 17 angeordnet, während die Riemenspannscheibe 16 an einem Maschinen- bzw. Sektionsende 18 befestigt ist. Die Riemenantriebsscheibe 15 ist mit einem Antriebsmotor, der hier nicht sichtbar ist, verbunden und treibt die Riemenantriebsscheibe 15 an. Die Riemenantriebsscheibe 15 ist vorzugsweise fest an dem Maschinenanfang 17 angeordnet. Im Gegensatz hierzu ist die Riemenspannscheibe 16 beweglich am Maschinen- oder Sektionsende 18 angeordnet. Durch eine vertikale Bewegung der Riemenspannscheibe 16 in Doppelpfeilrichtung kann der Riemen 10 mehr oder weniger gespannt werden.

Der Riemen 10 läuft über Eckrollen 19 und Stützrollen 20. Die Eckrollen 19 lenken den Riemen 10 und die Riementrums 4 bzw. 5 in die gewünschte Position auf Höhe der Spinneinheiten um. Zwischen den Eckrollen 19 verläuft der Riemen 10 vorzugsweise geradlinig oder zickzack-förmig entlang einer Vielzahl nebeneinander angeordneter Spinneinheiten 1 (vgl. Figur 1). Die Führung der Riementrums 4 und 5 im Bereich der Spinneinheiten 1 erfolgt mittels der Stützrollen 20.

Die Stützrollen 20 sind zwischen den Spinneinheiten 1 angeordnet. Sie können an jeder Spinneinheit 1 vorhanden sein oder auch mit einem Abstand mehrerer Spinneinheiten 1 vorgesehen sein. Jede Stützrolle 20 weist Flächen oder Nuten auf, auf oder in denen das Riementrum 4 bzw. 5 liegt und in seiner Position gehalten wird. Hierdurch ist sowohl ein stabiler Lauf des Riemens 10 in Bezug auf den Faden 3 gewährleistet, als auch damit in Zusammenhang ein gleichmäßiges Verdrallen des Fadens 3. Die Eckrollen 19 und/oder die Stützrollen 20 können unterschiedliche Durchmesser für das Riementrum 4 und das Riementrum 5 aufweisen. Hierdurch wird bei einer horizontalen Ausrichtung der Achse der Stützrollen 20 ein vertikaler Abstand der Riementrums 4 und 5 erzielt. Weisen die Eckrollen 19 und die Stützrollen 20 jedoch einen gleichen Durchmesser ihrer Stützflächen auf, so befindet sich bei einer horizontalen Anordnung der Achsen der Stützrollen 20 der Verlauf von Riementrum 4 und Riementrum 5 in derselben horizontalen Ebene.

Riementrum 4 und Riementrum 5 bewegen sich gegenläufig mit den Geschwindigkeiten v1 und v2. Die Stützflächen der Stützrollen 20 drehen sich daher ebenfalls gegenläufig. Die Stützrollen 20 weisen daher vorteilhafterweise Teilrollen auf, die unabhängig voneinander drehbar gelagert sind.

Durch die oben beschriebenen Verstärkungsfasern 12 des Riemens 10 ist dieser derart verstärkt, dass der Riemen 10 pro Newton Zugkraft eine Dehnung von maximal 0,05% aufweist. Der Riemen 10 kann aber auch derart verstärkt sein, dass dieser pro Newton Zugkraft eine Dehnung von maximal 0,005% aufweist. Dadurch kann der Riemen 10 derart stark gespannt werden, dass dieser nicht zwischen zwei Stützrollen 20 durchhängt. Außerdem wird der Riemen 10 nicht bzw. nur geringfügig durch die Fadenspannungen F₁₁, F₁₂, F₂₁, F₂₂ (vgl. Figur 1) aus dessen Position gezogen.

Außerdem weist die Spinnmaschine eine Ableitungsvorrichtung 21 auf, die eine statische Aufladung des Riemens 10 ableitet. Derartige statische Aufladungen können entstehen, wenn zwischen dem Faden 3 und dem Riemen 10 bzw. den Riementrums 4 und 5 (vgl. Figur 1) eine Reibung ausgebildet ist. Die Ableitungsvorrichtung 21 kann beispielsweise einen Gleitschuh und/oder einen Kohlekontakt umfassen und ist elektrisch leitend, so dass die statische Aufladung von dem Riemen 10 auf die Ableitungsvorrichtung 21 übergehen kann. Der Gleitschuh kann dazu beispielsweise aus einem leitfähigen Metall ausgebildet sein und eine Gleitfläche umfassen, über die der Riemen 10 geführt ist, so dass ein elektrischer Kontakt zwischen Riemen 10 und der Gleitfläche ausgebildet ist. Die Ableitungsvorrichtung 21 ist des Weiteren mit einer Erdung 22 verbunden, um die statische Aufladung abzuleiten.

Zusätzlich oder alternativ kann zumindest eine Stützrolle 20 direkt mit einer Erdung 22 verbunden sein, um die statische Aufladung des Riemens 10 abzuleiten. Dazu umfasst die Stützrolle 20 vorzugsweise ein leitendes Material, beispielsweise ein Metall. Damit wirkt die Stützrolle 20 sozusagen selbst als Ableitungsvorrichtung.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spinneinheit einer Spinnmaschine
- 2: Ausgangswalzenpaar eines Streckwerks
- 3: Faden
- 4: Riemen bzw. erstes Riementrum
- 5: Riemen bzw. zweites Riementrum
- 6: Fadenführer
- 7: Ringläufer
- 8: Spule
- 9: Falschdralleinrichtung
- 10: Riemen
- 11: Kunststoffmaterial
- 12: Verstärkungsfasern
- 13: Seele
- 15: Riemenantriebsscheibe
- 16: Riemenspannscheibe
- 17: Maschinenanfang
- 18: Maschinenende
- 19: Eckrolle
- 20: Stützrolle
- 21: Ableitungsvorrichtung
- 22: Erdung
- 23: Spinnmaschine
- F₁₁, F₁₂, F₂₁, F₂₂: Fadenspannungen
- v1, v2: Riemengeschwindigkeit

## Patentansprüche

1. Riemen zur Verwendung in einer Falschdralleinrichtung (9) einer Spinnmaschine, insbesondere Ringspinnmaschine, wobei der Riemen (10) zumindest teilweise aus einem Kunststoffmaterial (11) ausgebildet ist, **dadurch gekennzeichnet, dass** der Riemen (10) Verstärkungsfasern (12) aufweist, die den Riemen (10) verstärken, so dass der Riemen (10) pro Newton Zugkraft eine Dehnung von maximal 0,05%, insbesondere pro Newton Zugkraft eine Dehnung von maximal 0,005%, aufweist.

2. Riemen nach dem vorherigen Anspruch, **dadurch gekennzeichnet, dass** die Verstärkungsfasern (12) eine Seele (13) des Riemens (10) bilden.

3. Riemen nach einem der vorherigen Ansprüche, **dadurch gekennzeichnet, dass** die Verstärkungsfasern (12) Aramidfasern, Karbonfasern, Metallfasern, Keramikfasern, Glasfasern und/oder Polyolefinfasern, insbesondere Spectra- oder Dyneemafasern, umfassen.

4. Riemen, insbesondere nach einem der vorherigen Ansprüche, zur Verwendung in einer Falschdralleinrichtung (9) einer Spinnmaschine, insbesondere Ringspinnmaschine, wobei der Riemen (10) zumindest teilweise aus einem Kunststoffmaterial (11) ausgebildet ist, **dadurch gekennzeichnet, dass** der Riemen (10) einen Reibungskoeffizienten zwischen 0,1 und 0,6, insbesondere zwischen 0,3 und 0,4, vorzugsweise bei einer Temperatur zwischen 25 °C und 50 °C aufweist.

5. Riemen nach einem der vorherigen Ansprüche, **dadurch gekennzeichnet, dass** der Riemen (10) ein Antistatikum umfasst, welches die Eigenschaft des Riemens (10) sich statisch aufzuladen verringert.

6. Riemen, insbesondere nach einem der vorherigen Ansprüche, zur Verwendung in einer Falschdralleinrichtung (9) einer Spinnmaschine, insbesondere Ringspinnmaschine, wobei der Riemen (10) zumindest teilweise aus einem Kunststoffmaterial (11) ausgebildet ist, **dadurch gekennzeichnet, dass** der Riemen (10) einen, insbesondere elektrisch leitfähigen, Zusatzstoff aufweist, welcher einen elektrischen Widerstand verringert, so dass der Riemen (10) einen elektrischen Widerstand von maximal 10^120hm, insbesondere maximal 10^6 Ohm, besonders bevorzugt maximal 10^3 Ohm, aufweist.

7. Riemen nach einem der vorherigen Ansprüche, **dadurch gekennzeichnet, dass** der Zusatzstoff Metallfasern, Metallpulver, Ruß, Graphit, Kohlefasern und/oder Nanofasern umfasst.

8. Spinnmaschine, insbesondere Ringspinnmaschine,
mit einer Vielzahl nebeneinander angeordneter Spinneinheiten (1), wobei jede Spinneinheit (1) ein Streckwerk zum Verziehen eines Faserbandes und
eine Spinneinrichtung zum Verdrehen des verzogenen Faserbandes zu einem Faden (3) sowie
eine zwischen dem Streckwerk und der Spinneinrichtung angeordnete Falschdralleinrichtung (9) aufweist,
wobei die Falschdralleinrichtung (9) zumindest zwei im Wesentlichen quer zum Faden (3) angeordnete, diesen kontaktierende und entgegengerichtet angetriebene Riementrums (4, 5) mindestens eines Riemens (10) aufweist,
die Riementrums (4, 5) insbesondere z-förmig von dem Faden (3) umschlungen sind und als Reibfläche für den Faden (3) dienen und die Riementrums (4, 5) von zumindest einer Stützrolle (20) geführt sind,
**dadurch gekennzeichnet, dass**
der Riemen (10) gemäß einem oder mehreren der vorherigen Ansprüche ausgebildet ist.

9. Spinnmaschine nach dem vorherigen Anspruch, **dadurch gekennzeichnet, dass** die Spinnmaschine eine Ableitungsvorrichtung (21) umfasst, die mit dem Riemen (10) einen elektrischen Kontakt aufweist, so dass mittels der Ableitungsvorrichtung (21) eine statische Aufladung des Riemens (10) ableitbar ist.

10. Spinnmaschine nach einem der vorherigen Ansprüche, **dadurch gekennzeichnet, dass** die zumindest eine Stützrolle (20) elektrisch leitend ausgebildet ist, so dass eine statische Aufladung des Riemens (10) über die Stützrolle (20) ableitbar ist.
